# FASCICULE DE BREVET EUROPEEN

(11) **EP 2 732 238 B1**
(45) Date de publication et mention de la délivrance du brevet: **10.04.2019**
(21) Numéro de dépôt: 12743497.5
(22) Date de dépôt: 03.07.2012
(51) Int. Cl.: G01C 15/00, G01C 21/20

(54) **PROCEDE DE REPRESENTATION DES MOUVEMENTS EVENTUELS D'UNE STRUCTURE POUR UN APPAREIL DE TYPE ORDIPHONE**
VERFAHREN ZUR DARSTELLUNG MÖGLICHER BEWEGUNGEN EINER STRUKTUR FÜR EINE VORRICHTUNG NACH ART EINES SMARTPHONES
METHOD OF REPRESENTING POSSIBLE MOVEMENTS OF A STRUCTURE FOR AN APPARATUS OF SMARTPHONE TYPE

(30) Priorité: 12.07.2011 FR 1156359
(43) Date de publication de la demande: 21.05.2014
(73) Titulaire: Soletanche Freyssinet, 92500 Rueil Malmaison (FR)
(72) Inventeur: SLUSAREK, Stéphane, F-92500 Rueil-Malmaison (FR); RANVIER, Fabien, F-92500 Rueil-Malmaison (FR); DA FONSECA, Paul, F-92500 Rueil-Malmaison (FR)
(74) Mandataire: Balesta, Pierre
(86) Numéro de dépôt international: PCT/FR2012/051543
(87) Numéro de publication internationale: WO 2013/007917

(56) Documents cités:
- EP-A1- 1 024 342
- US-A1- 2004 174 542
- US-A1- 2011 066 375

## Description

### Arrière-plan de l'invention

La présente invention concerne le domaine technique de la surveillance des mouvements d'une structure, par exemple un immeuble, un pont, des fondations, un sol, une route, un barrage, un tunnel ou toute autre structure de type ouvrage d'art susceptible de se déformer ou de se détériorer physiquement de manière statique ou dynamique.

Par mouvement, on entend également les déformations locales et plus généralement tout déplacement de la structure, local ou global.

La déformation d'une telle structure peut par exemple être provoquée par un phénomène naturel ou bien en raison de travaux réalisés à proximité de la structure. Par exemple, lors de la construction d'un tunnel en zone urbaine, il est important de surveiller l'état et les déformations des bâtiments situés en surface tout au long du chantier.

De même, il est nécessaire de contrôler régulièrement les déformations éventuelles d'un barrage pour s'assurer qu'il n'est pas sur le point de céder.

Actuellement, pour surveiller la déformation d'une structure, il est connu de disposer un ou plusieurs dispositifs de mesure sur cette structure, d'acquérir les données de mesures fournies par chacun des dispositifs de mesure, et de traiter ces données afin de générer une alarme s'il s'avère que la déformation mesurée dépasse un seuil prédéterminé.

Généralement, la visualisation des données traitées et plus généralement les opérations de surveillance sont réalisées dans un centre de contrôle qui n'est pas nécessairement situé sur le chantier ou à proximité de la structure surveillée.

Par conséquent, les équipes travaillant sur le chantier ou à proximité de la structure surveillée, ont difficilement accès de manière directe aux données. En outre, les opérateurs ne savent pas nécessairement où les dispositifs de mesure ont été placés et quels sont les dispositifs de mesure qui ont détecté une déformation ayant généré une alarme.
On connait également le document US 2011/066375 qui décrit un procédé de navigation associé au positionnement d'objets ainsi que le document EP 1 024 342 qui décrit un dispositif d'arpentage.

### Objet et résumé de l'invention

Un but de l'invention est d'augmenter le niveau d'information des personnes situées à proximité de la structure à surveiller en leur permettant d'avoir accès rapidement et facilement aux informations relatives aux dispositifs de mesure de mouvements.

A cet effet, l'invention porte sur un procédé de représentation des mouvements éventuels d'une structure à surveiller qui est mis en oeuvre dans un appareil comprenant un dispositif de prise d'images, ladite structure étant munie d'au moins un dispositif de mesure de mouvements fixé à la structure pour permettre la mesure des déformations éventuelles de ladite structure, ledit procédé comportant :
- une étape d'acquisition d'une image de la structure à l'aide du dispositif de prise d'images ;
- une étape d'envoi d'une requête depuis l'appareil vers un serveur distant ;
- une étape de réception dans l'appareil, en réponse à ladite requête, d'au moins une information relative au dispositif de mesure de mouvements, ladite information comprenant au moins une donnée de mesure obtenue à l'aide du dispositif de mesure de mouvements ; et
- une étape d'insertion, dans ladite image, d'au moins ladite donnée de mesure de mouvements.

Ce procédé est mis en oeuvre dans un appareil qui est de préférence, mais pas exclusivement, un système mobile. Il s'agit par exemple d'un Ordiphone, d'un téléphone portable, d'une tablette, d'un ordinateur portable ou de tout autre système mobile. Il peut également s'agir d'un système fixe. L'appareil est également muni d'un dispositif d'affichage, par exemple un écran, pour afficher l'image dans laquelle est insérée l'information relative au dispositif de mesure de mouvements. En d'autres termes, le dispositif d'affichage de l'appareil affiche l'image de la structure ainsi que l'information relative au dispositif de mesure de mouvements, cette information étant par exemple superposée à l'image de la structure. Ainsi, l'utilisateur de l'appareil a rapidement et facilement accès à des informations concernant le dispositif de mesure de mouvements situé sur la structure à surveiller. L'utilisateur dispose ainsi d'un environnement de réalité ou virtualité augmentée.

Au sens de l'invention, la structure à surveiller est de type ouvrage d'art, tel qu'un immeuble, un pont, des fondations, une route, un tunnel, un barrage ou tout autre ouvrage d'art susceptible de se déformer ou de se détériorer physiquement de manière statique ou dynamique. La structure peut également être un sol, par exemple un talus.

Le procédé selon l'invention est mis en oeuvre de préférence périodiquement ou en temps réel. Par conséquent, l'utilisateur peut obtenir l'information en continu ce qui permet d'être informé très rapidement d'un nouvel événement. Il peut alternativement récupérer l'information périodiquement par exemple une ou plusieurs fois par jour et ensuite utiliser l'appareil avec l'information stockée sans plus avoir à se connecter au serveur.

Au sens de l'invention, par dispositif de prise d'images, on entend un appareil photo ou une caméra vidéo. Le plus souvent, il s'agira d'une caméra vidéo embarquée dans l'appareil, telle que celle que l'on trouve aujourd'hui dans les téléphones portables ou les tablettes.

Le ou les dispositifs de mesure de mouvements qui sont disposés sur la structure à surveiller sont par exemple, des capteurs de vibration, des cibles de mesure visées par un ou plusieurs théodolites, ou tout autre dispositif de mesure de mouvements ou de déformations.

L'envoi de la requête est effectué sur un réseau du type Internet, intranet ou extranet, cellulaire, filaire ou sans fil. A cet effet, on utilisera les protocoles de communication connus, cryptés ou non, par exemple mais non exclusivement du type TCP/IP. On comprend donc que l'appareil et le serveur communiquent entre eux par le biais de ce réseau informatique.

De préférence, ladite information relative au dispositif de mesure de mouvements est stockée dans une base de données située dans le serveur distant. Encore de préférence, le serveur distant est connecté au dispositif de mesure de mouvements directement, ou par le biais d'un réseau, afin de recevoir périodiquement ou en temps réel l'information relative audit dispositif de mesure de mouvements.

De préférence, le procédé selon l'invention est réalisé en temps réel. Par suite, l'information relative au dispositif de mesure de mouvements telle qu'affichée sur l'écran de l'appareil est mise à jour en temps réel.

Avantageusement, le dispositif de mesure de mouvements est une cible de mesure qui est visée par un théodolite relié au serveur distant. Dans ce cas, la donnée de mesure est fournie par le théodolite.

Avantageusement, le dispositif de mesure de mouvements est un capteur relié au serveur distant.

Bien évidemment, la structure peut être munie de cibles de mesure et/ou de capteurs.

Ce capteur est par exemple un extensomètre ou bien encore un capteur de vibrations.

Cette donnée de mesure est donc insérée dans l'image, par exemple sous forme alphanumérique, ou bien encore sous forme d'un code couleur ou tout autre type de représentation graphique ou sonore.

Par exemple, mais pas exclusivement, la donnée de mesure correspond à la dernière mesure réalisée par le dispositif de mesure de mouvements. Les données de mesure reçues peuvent également être un historique de mesures effectuées par le dispositif de mesure ou bien résulter d'un prétraitement afin de présenter les informations de manière plus pertinentes.

Ainsi, l'opérateur peut-il facilement et rapidement être informé d'un problème lié à la structure, qui a été identifié à l'aide du dispositif de mesure de mouvements. Par exemple, le dispositif de mesure de mouvements pourra détecter un déplacement ou une déformation supérieures à un seuil déterminé, en conséquence de quoi une alarme sera déclenchée et affichée sur l'écran de l'appareil.

Avantageusement, l'information relative au dispositif de mesure de mouvements comprend en outre l'état de fonctionnement du dispositif de mesure de mouvements ou du théodolite visant le dispositif de mesure. Il peut donc s'agir de l'état de fonctionnement du capteur ou du théodolite. Il peut encore s'agir de l'état de fonctionnement d'une cible de mesure visée par le théodolite, une cible de mesure non vue par le théodolite sera considérée comme présentant un disfonctionnement.

Cette information est insérée dans l'image sous la forme d'un mot, d'un code alphanumérique, d'une représentation graphique ou sonore. Grâce à l'invention, l'opérateur peut notamment contrôler facilement le dispositif de mesure de mouvements depuis le site où se situe la structure surveillée. En particulier, il pourra donc aisément visualiser sur le dispositif d'affichage de l'appareil le ou les dispositifs de mesure en panne.

Avantageusement, l'information relative au dispositif de mesure comprend en outre les coordonnées du dispositif de mesure de mouvements.

Ces coordonnées peuvent être insérées à l'état brut dans l'image. De manière préférentielle, lesdites coordonnées sont utilisées pour positionner le dispositif de mesure de mouvements dans l'image.

A cet effet, avantageusement lors de l'étape d'insertion dans ladite image de l'information relative au dispositif de mesure de mouvements, on réalise une étape de positionnement dans l'image d'une représentation graphique du dispositif de mesure de mouvements.

Ce positionnement consiste préférentiellement à insérer dans l'image, ou superposer à l'image, un dessin, par un exemple un point, une flèche, une vignette out toute autre représentation ou symbole visuel, qui permet notamment d'indiquer à l'utilisateur où se situe le dispositif de mesure de mouvements sur la structure.

Préférentiellement, cette information est également mise à jour en temps réel. Par suite, lorsque l'opérateur déplace le dispositif de prise d'images, la position du dispositif de mesure dans l'image est actualisée en temps réel.

Comme mentionné plus haut, l'étape de positionnement est réalisée à l'aide des coordonnées du dispositif de mesure de mouvements.

Selon une première variante, les coordonnées du dispositif de mesure de mouvements sont téléchargées depuis le serveur, de manière périodique ou bien en temps réel. A cet effet, le procédé selon l'invention comporte une étape de téléchargement des coordonnées du dispositif de mesure de mouvements depuis le serveur distant.

Selon une autre variante, les coordonnées du dispositif de mesure de mouvements sont préchargées dans une mémoire fixe ou amovible de l'appareil. Pour ce faire, le procédé selon l'invention comporte en outre une étape de stockage desdites coordonnées dans une mémoire de l'appareil.

Selon une autre variante, l'étape de stockage peut également être réalisée pendant ou après l'étape de téléchargement.

Lorsque la structure à surveiller est munie d'une pluralité de dispositifs de mesure de mouvements, l'étape de positionnement comporte avantageusement une étape de filtrage dans laquelle on sélectionne les dispositifs de mesure de mouvements qui sont situés dans le champ de vision du dispositif de prise d'images. Préférentiellement, seuls les dispositifs de mesure de mouvements sélectionnés sont insérés dans l'image de la structure.

Selon un mode de réalisation préféré, l'étape de filtrage utilise la position géographique de l'appareil, l'orientation de l'appareil et/ou l'inclinaison de l'appareil.

La position géographique de l'appareil est préférentiellement réalisée à l'aide d'un dispositif de positionnement, par exemple un dispositif de positionnement par satellite de type GPS ou tout autre système de géolocalisation, de préférence embarqué dans l'appareil. Si l'appareil est également relié à un réseau cellulaire téléphonique, la détermination de la position de l'appareil pourra également utiliser une méthode de triangulation, connue par ailleurs.

Lorsque la structure est un tunnel, l'appareil sera avantageusement localisé par un procédé de reconnaissance de forme. A cet effet, des étiquettes de positionnement pourront être placées dans le tunnel afin d'aider à la reconnaissance. Alternativement, l'appareil sera positionné par triangulation en utilisant des bornes réseaux, par exemple wifi, disposées dans le tunnel, ou tout autre dispositif de positionnement.

L'orientation de l'appareil et l'inclinaison de l'appareil sont obtenues à l'aide d'une boussole électronique embarquée dans l'appareil. On pourra également utiliser un ou plusieurs gyroscopes électroniques embarqués dans l'appareil afin de contrôler finement la gestion des mouvements de l'appareil. En outre, l'inclinaison de l'appareil pourra être obtenue à l'aide d'un inclinomètre embarqué dans l'appareil, ce dernier étant constitué d'un ou plusieurs accéléromètres.

De préférence, l'étape de filtrage utilise également les caractéristiques du dispositif de prise d'images, en particulier la focale et l'angle d'ouverture de l'objectif.

De manière avantageuse, l'étape de positionnement comporte une étape de reconnaissance de la structure située dans ladite image. Cette étape de reconnaissance est préférentiellement mais pas nécessairement combinée à l'étape de filtrage précédemment décrite.

L'étape de reconnaissance permet d'identifier la structure surveillée et, par suite, de connaitre avec précision la position du ou des dispositifs de mesure.

Pour ce faire, l'étape de reconnaissance comporte avantageusement une étape d'analyse de la forme caractéristique de la structure située dans l'image et une étape de comparaison de cette forme caractéristique avec des formes caractéristiques chargées dans une base de données. Les étapes d'analyse et de comparaison sont mises en oeuvre par un algorithme de reconnaissance de forme connu par ailleurs. La position des dispositifs de mesure de mouvements étant associée à la forme caractéristique, il est alors possible de recaler la position des dispositifs de mesure de mouvements dans l'image.

Ainsi, l'opérateur peut-il visualiser sur le dispositif d'affichage de l'appareil, la position précise du ou des dispositifs de mesure de mouvements ainsi qu'une ou plusieurs données de mesure mesurées par ledit(s) dispositifs) de mesure.

Le procédé selon l'invention comporte en outre une étape d'envoi d'une requête depuis l'appareil vers le serveur distant et une étape de réception dans l'appareil, en réponse à ladite requête, d'informations relatives à la déformation de la structure.

Ces informations relatives à la déformation de la structure peuvent par exemple être constituées d'une ou plusieurs courbes ou surfaces géométriques représentant la déformation de la structure surveillée. Il peut s'agir par exemple d'une simulation de la déformation de la structure surveillée tenant compte des données de mesures enregistrées. Il peut également s'agir d'une courbe de tassement de la structure.

Ces informations relatives à la déformation de la structure sont avantageusement insérées dans l'image.

Ainsi, grâce à l'invention, l'appareil devient un outil d'aide à la décision.

L'invention porte en outre sur un programme d'ordinateur comprenant des instructions pour l'exécution des étapes du procédé selon l'invention, lorsque ledit programme est exécuté par un ordinateur. En l'espèce, l'ordinateur est préférentiellement embarqué dans l'appareil.

Ces instructions se présentent sous la forme d'un code exécutable qui est stocké de préférence dans une mémoire logée dans l'appareil, par exemple une unité de stockage ou un disque dur.

L'invention concerne également un procédé de représentation des mouvements éventuels d'une structure, ladite structure étant munie d'au moins un dispositif de mesure de mouvements fixé à la structure pour mesurer les éventuels mouvements de la structure, ledit procédé comportant :
- une étape d'acquisition d'une image de la structure à l'aide d'un dispositif de prise d'images disposé dans un appareil ;
- une étape d'acquisition d'au moins une donnée de mesure de mouvements obtenue à l'aide du dispositif de mesure ;
- une étape de transmission de ladite donnée de mesure de mouvements vers un serveur distant, distinct de l'appareil ;
- une étape d'envoi d'une requête depuis l'appareil vers le serveur distant ;
- une étape de réception dans l'appareil, en réponse à la requête, de ladite donnée de mesure de mouvements ;
- une étape d'insertion, dans ladite image, de ladite donnée de mesure de mouvements ; et
- une étape d'affichage, dans l'appareil, de l'image dans laquelle est insérée la donnée de mesure de mouvements.

L'invention porte en outre sur un appareil, de préférence mais pas exclusivement mobile, qui comprend un dispositif de prise d'images, un dispositif d'affichage et des moyens logiciels adaptés à la mise en oeuvre du procédé selon l'invention.

De préférence, l'appareil est mobile. Encore de préférence, il est également muni d'un ou plusieurs éléments pris parmi un dispositif de positionnement par satellite de type GPS, une boussole électronique, un inclinomètre, un gyroscope électronique et un accéléromètre. Il comporte en outre au moins une mémoire destinée à stocker les moyens logiciels ainsi que le ou les informations relatives au(x) dispositif(s) de mesure de mouvements précédemment décrites. Il comprend également des moyens de transmission et réception de données via le réseau informatique ainsi qu'au moins un microprocesseur.

Le dispositif d'affichage sera par exemple un écran LCD intégré dans l'appareil.

L'invention concerne enfin une installation comportant une pluralité de dispositifs de mesure de mouvements fixés à une structure à surveiller, un serveur distant recevant les données de mesures obtenues à l'aide des dispositifs de mesure de mouvements, et au moins un appareil selon l'invention qui communique avec le serveur distant.

Avantageusement, le serveur de l'installation comporte des moyens de récupération et des moyens de stockage des données de mesure obtenues à l'aide des dispositifs de mesure.

Comme mentionné précédemment, les données de mesure sont fournies par les dispositifs de mesure de mouvements lorsque ces derniers sont des capteurs, par exemple un extensomètre ou un capteur de vibrations, tandis que lorsque les dispositifs de mesure de mouvements sont des cibles de mesure, par exemple des prismes, les données de mesure sont fournies au serveur par le ou les théodolites visant lesdites cibles.
Les moyens de récupération comportent par exemple au moins une liaison de communication par réseau, filaire ou sans-fil.

Le serveur distant comporte en outre des moyens pour transmettre à l'appareil lesdites données de mesure.

De préférence, les dispositifs de mesure de mouvements comprennent au moins une cible de mesure visée par un théodolite relié au serveur distant, ou au moins un capteur relié au serveur distant.

### Brève description des dessins

L'invention sera mieux comprise à la lecture de la description qui suit de modes de réalisation de l'invention donnés à titre d'exemples non limitatif, en référence aux dessins annexés sur lesquels :
- la figure **1** schématise une installation selon l'invention, comprenant un appareil selon l'invention fournissant à un utilisateur des informations relatives à des dispositifs de mesure de mouvements placés sur une structure à surveiller ;
- la figure **2** montre le dispositif d'affichage de l'appareil lorsque le dispositif de prise d'images vise la structure à surveillée ;
- la figure **3** montre l'appareil de la figure **2** lorsque ce dernier est incliné par rapport à un plan vertical ;
- la figure **4** montre l'appareil de la figure **2** lorsque ce dernier est pivoté dans un plan horizontal ;
- la figure **5** schématise les échanges de données entre l'appareil, le serveur distant et les dispositifs de mesure de mouvements ;
- la figure **6** illustre l'étape de téléchargement des coordonnées des dispositifs de mesure de mouvements ;
- la figure **7** illustre l'étape de filtrage et l'étape de positionnement des dispositifs de mesure dans l'image ;
- la figure **8** illustre l'étape de reconnaissance de la forme caractéristique de la structure surveillée ;
- la figure **9** illustre l'étape de recalage de la position des dispositifs de mesure dans l'image ; et
- la figure **10** schématise l'étape de réception par l'appareil d'une courbe de tassement et son insertion dans l'image.

### Description détaillée de l'invention

La présente invention est une application de la réalité augmentée à la surveillance des mouvements éventuels de structures, telles que des bâtiments, ponts, fondations, routes, tunnels, barrages, sols, ou toute autre structure susceptible de se déformer. La présente invention trouve donc son application notamment dans la surveillance de sols ou de parties d'ouvrages d'arts susceptibles de bouger ou de se déformer.

Les mouvements peuvent être dus à des travaux réalisés à proximité ou en-dessous de la structure ou être la conséquence de mouvements de terrains. Par « mouvements », on entend aussi bien les déplacements que les déformations locales de la structure surveillée. Il peut s'agir notamment de vibrations subies localement par la structure.

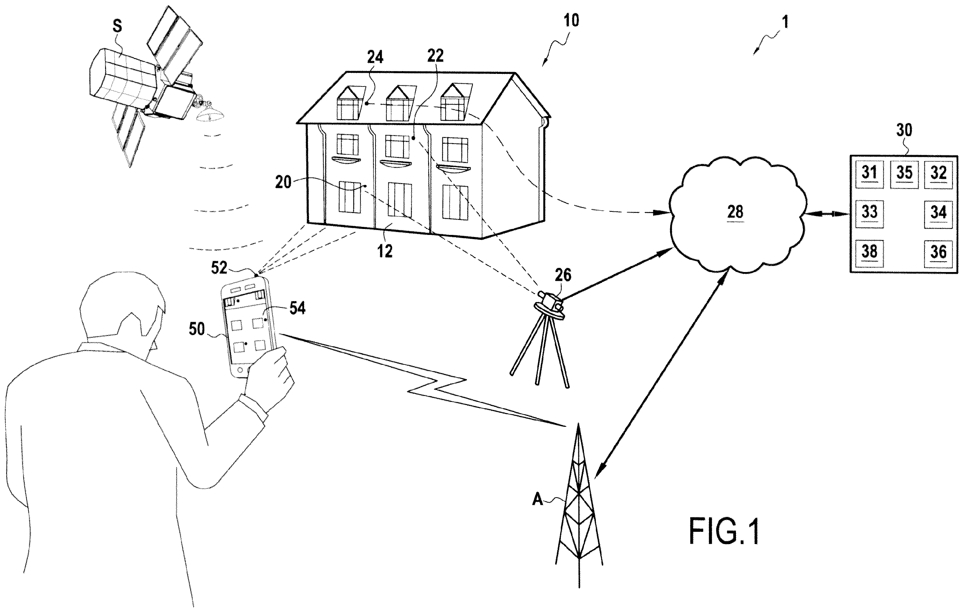

Dans l'exemple d'installation **1** représentée sur la figure **1** et donnée à titre d'exemple non limitatif, on s'intéresse à la surveillance d'un ouvrage d'art constitué dans cet exemple non limitatif par un immeuble **10** car un tunnel (non représenté ici) est en cours de construction sous cet immeuble. On souhaite donc pouvoir surveiller en temps réel les éventuels mouvements ou déformations de l'immeuble **10.** A cet égard, l'immeuble **10** comporte plusieurs dispositifs de mesure de mouvements **20, 22** et **24** à savoir deux cibles de mesure **20, 22** fixées à la façade tout en étant visées par un théodolite **26,** ainsi qu'un extensomètre **24.** Bien entendu, il s'agit d'un exemple non limitatif. Sans sortir du cadre de l'invention, il peut être envisagé de placer une seule, ou davantage, cibles de mesure. D'autres dispositifs de mesure, comme des capteurs de vibration ou autres détecteurs peuvent également être prévus.

De manière connue, le théodolite **26** permet de mesurer le déplacement des cibles de mesure **20, 22** par rapport à leurs positions initiales dont on connait les coordonnées.

Le théodolite réalise des mesures de manière périodique, par exemple une mesure toute les deux heures, et génère des données de mesure qui sont de préférence transmises via un réseau de communication **28,** par exemple Internet, à un serveur **30.**

Le serveur **30** comprend des moyens de stockage **32** des données de mesure fournies par les dispositifs de mesure de mouvements **20, 22** et **24.** Dans cet exemple, les moyens de stockage sont par exemple constitués par un ou plusieurs disques-durs **32** situés dans le serveur ou dans un ordinateur distant.

Le serveur **30** comporte en outre deux moyens de récupération **34** des données fournies par les dispositifs de mesure **20, 22** et **24.**

L'extensomètre **24** permet de mesurer des déformations locales de la façade de l'immeuble **10.** Il fournit aussi, de manière périodique, des données de mesure qui sont également transmises au serveur **30** via le réseau **28** et qui sont stockées dans les moyens de stockage **32.**

Le serveur **30** comporte en outre des moyens **36** pour transmettre au moins une donnée de mesure à un ou plusieurs appareils, ainsi qu'un ou plusieurs microprocesseurs **38.**

On comprend donc que le serveur **30** comporte ou est connecté à une base de données **31** qui stocke les différentes mesures prises par chacun des dispositifs de mesure **20, 22** et **24.** La base de données comporte en outre les coordonnées géographiques de chacun des dispositifs de mesure **20, 22** et **24.**

Conformément à l'invention, le procédé de surveillance de la déformation de l'immeuble **10** est mis en oeuvre notamment grâce à un appareil **50.** Dans cet exemple, il s'agit d'un système mobile, en l'espèce téléphone portable, de type Ordiphone, qui comporte un dispositif de prise d'images **52,** de préférence comportant une caméra **52.** L'appareil **50** comprend en outre un dispositif d'affichage **54,** de préférence un écran d'affichage, qui permet d'afficher les images prises par la caméra **52.**

L'appareil comprend également, de manière classique, un dispositif de positionnement, par exemple un GPS communiquant avec un ou plusieurs satellites **S,** permettant de déterminer la position géographique de l'appareil et de fournir les coordonnées géographiques de l'appareil.

En outre, l'appareil **50** comporte des moyens pour déterminer l'orientation de l'appareil dans un plan horizontal. Il s'agit en l'espèce d'une boussole permettant de fournir l'orientation de l'appareil dans un plan horizontal sous forme de valeur angulaire. Un gyroscope triaxial pourra également être utilisé.

L'appareil **50** comporte également des moyens pour déterminer l'inclinaison de l'appareil. Il s'agit en l'espèce d'un inclinomètre à base d'accéléromètres permettant de fournir l'inclinaison de l'appareil par rapport à un plan vertical. Là encore, il s'agit d'une valeur angulaire.

On précise que l'on trouve actuellement dans le commerce des téléphones portables munis d'une boussole et d'un inclinomètre.

Enfin, l'appareil **50** comporte des moyens de communication sans-fil, par exemple de type Wi-Fi, Wimax, cellulaire 3G, 4G ou tout autre type de moyens de connexion au réseau **28.** Dans cet exemple, l'appareil **50** est relié à un réseau cellulaire 3G par le biais d'une antenne-relais **A** connectée au réseau **28.** On va maintenant décrire plus en détail le procédé de surveillance mis en oeuvre par l'appareil **50.**

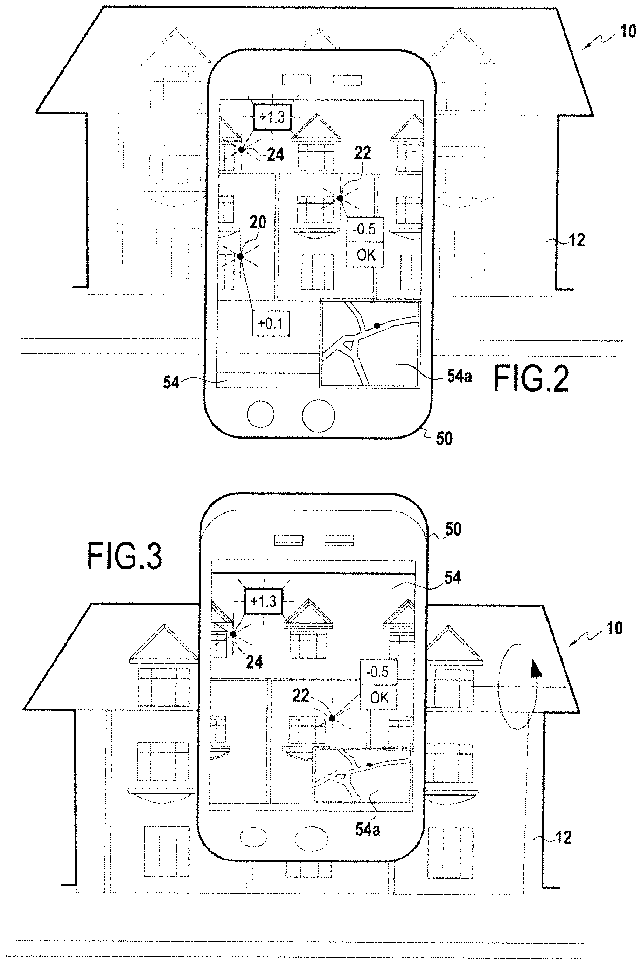

Comme on le voit sur la figure **2****,** lorsque l'opérateur positionne l'appareil **50** de façon que la caméra **52** filme l'immeuble **10,** l'image d'une partie de l'immeuble apparait sur l'écran de l'appareil **50.** La partie de l'immeuble **10** affichée sera plus ou moins grande en fonction de la distance entre l'opérateur et l'immeuble **10.** Dans cet exemple, les dispositifs de mesure de mouvements **20,22** et **24** sont dans le champ de vision de la caméra **52.**

Conformément à l'invention, les dispositifs de mesure **20, 22** et **24,** à savoir les cibles de mesure **20, 22** et l'extensomètre **24** sont positionnés dans l'image de la partie de l'immeuble **10** sous la forme de vignettes insérées dans l'image.

Autrement dit, des vignettes ou pastilles sont superposées à l'image de la partie de l'immeuble **10,** à l'endroit où se trouvent les dispositifs de mesure de mouvements **20, 22** et **24.**

Dans l'exemple de la figure **2****,** on comprend que grâce à l'invention, l'opérateur peut savoir facilement et rapidement où sont situés les dispositifs de mesure **20, 22, 24,** sachant que ces derniers sont le plus souvent difficilement distinguables à l'oeil nu.

Avantageusement, l'écran **54** affiche également, pour chacun des dispositifs de mesure de mouvements **20, 22, 24,** la dernière mesure obtenue. Ces données de mesure sont insérées dans l'image de la partie de l'immeuble **10.** En cliquant sur la vignette symbolisant le dispositif de mesure **22,** on obtient l'état de fonctionnement du dispositif de mesure **22** sélectionné. Dans cet exemple, il est affiché « ok » en dessous de la dernière mesure obtenue, ce qui signifie que la cible de mesure **22** fonctionne correctement.

On constate par ailleurs que la donnée de mesure relative à l'extensomètre **24** est encadrée et clignote. Cela signifie que la déformation locale mesurée par l'extensomètre dépasse une valeur prédéterminée et a provoqué le déclenchement d'une alarme. Le clignotement est un exemple de donnée d'alarme insérée dans l'image de la partie de l'immeuble **10.**

L'opérateur est donc informé en temps réel des valeurs mesurées par les dispositifs de mesure, de leur état de fonctionnement et du point de savoir si un niveau d'alarme a été atteint.

Selon une variante, l'écran **54** affiche en outre, dans un coin **54a,** un plan **2D** du quartier où se trouve l'opérateur.

Les dispositifs de mesure de mouvements **20, 22, 24** sont positionnés dans l'image de la partie de la structure **10** à partir de leurs coordonnées et des coordonnées géographiques de l'appareil **50.** De préférence, on utilise également l'orientation et l'inclinaison de l'appareil **50.** Les caractéristiques de la caméra, à savoir la longueur focale et son angle d'ouverture peuvent également être utilisées pour améliorer la précision du positionnement des dispositifs de mesure dans l'image.

Par exemple, on pourra calculer les coordonnées des points de la structure qui correspondent aux coins de l'écran à l'aide des coordonnées de l'appareil, des coordonnées d'un ou plusieurs dispositifs de mesure, de l'orientation de l'appareil, de l'inclinaison de l'appareil et/ou des caractéristiques de la caméra. Il est ainsi possible d'estimer la position des dispositifs de mesure à l'intérieur de l'image affichée sur l'écran.

Une autre façon d'améliorer le positionnement des dispositifs de mesure dans l'image sera détaillée ci-dessous.

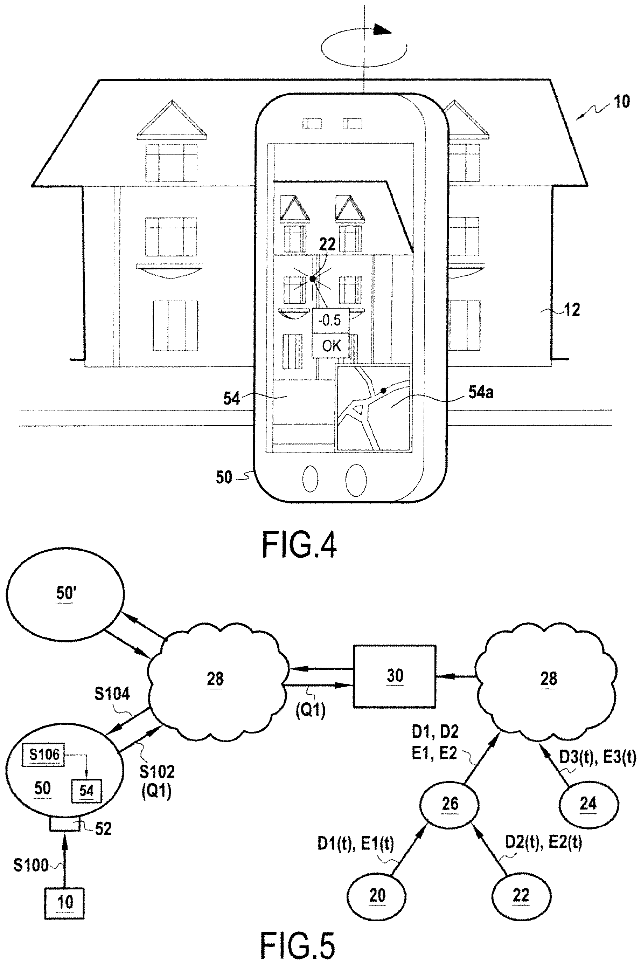

Comme on peut le voir sur les figures **3** et **4****,** lors d'un déplacement de l'appareil **50,** les dispositifs de mesure **20, 22** et **24** sont repositionnés dynamiquement dans l'image de la partie de l'immeuble **10.** Pour ce faire, on utilise l'orientation et l'inclinaison de l'appareil afin de recalculer la position des dispositifs de mesure. En d'autres termes, on réalise une étape de filtrage pour déterminer, parmi les dispositifs de mesure **20, 22, 24,** un sous-groupe de dispositifs de mesure qui sont situés dans le champ de vision du dispositif de prise d'images. Dans cet exemple, pour la figure **3** (inclinaison de l'appareil **50** par rapport à un plan vertical), le sous-groupe de dispositifs de mesure situés dans le champ de vision de la caméra **52** est constitué de la cible de mesure **22** et de l'extensomètre **24,** tandis que pour la figure **4** (pivotement de l'appareil **50** dans un plan horizontal), le sous-groupe est constitué uniquement de la cible de mesure **22.** Seuls les dispositifs de mesure appartenant au sous-groupe sont positionnés dans l'image de la partie de l'immeuble **10.**

Selon une autre variante, l'écran affiche également la présence d'autres dispositifs de mesure de mouvements situés à proximité de l'appareil mais hors du champ de vision de la caméra.

A l'aide de la figure **5****,** on va décrire plus en détail un premier mode de réalisation de l'invention et notamment les procédés de surveillance de la déformation d'une structure mis en oeuvre par l'appareil **50** et le serveur **30.** On précise ici que l'appareil **50** comporte une unité de stockage **53,** par exemple une mémoire, pour stocker un programme d'ordinateur comprenant les instructions pour l'exécution du procédé précité.

On précise également que l'appareil **50** est également appelé « client » dans la mesure où il s'agit d'un terminal communiquant avec le serveur **30** dans une architecture client/serveur. La figure **5** illustre les échanges d'informations entre l'appareil-client **50** et le serveur **30.** On comprend donc que plusieurs appareils **50, 50'** peuvent communiquer en même temps avec le serveur **30,** grâce à quoi plusieurs opérateurs peuvent surveiller en même temps la même ou différentes structures faisant l'objet de la surveillance.

Conformément à l'invention, le procédé mis en oeuvre par l'appareil **50** comporte une étape **S100** d'acquisition d'une image de tout ou partie de l'immeuble **10** à l'aide de la caméra **52.** Le procédé mis en oeuvre par l'appareil **50** comporte en outre une étape **S102** d'envoi d'une requête **Q1,** par exemple du type SQL, au serveur distant **30.** Cette requête vise à demander au serveur de transmettre à l'appareil les informations relatives aux dispositifs de mesure de mouvements **20, 22** et **24.** Dans cet exemple, la requête porte sur tous les dispositifs de mesure, mais elle pourrait également ne concerner que les dispositifs de mesure qui sont déterminés comme se trouvant dans le champ de vision de la caméra **52.**

En réponse à la requête **Q1,** le serveur transmet à l'appareil **50** des informations relatives aux dispositifs de mesure de mouvements **20, 22,** et **24,** à savoir les données de mesure **D1(t), D2(t),** prises par le théodolite **26** visant les cibles de mesure **20,22** et les données de mesure **D3(t)** prises par l'extensomètre, ainsi que leurs états de fonctionnement (condition de fonctionnement correct ou en panne) **E1(t), E2(t), E3(t).** Pour les cibles de mesure **20,22,** les états de fonctionnement **E1(t), E2(t)** sont fournis par le théodolite **26** qui indique notamment les erreurs éventuelles de mesure ou de visée des cibles. Il peut également s'agir de l'état de fonctionnement du théodolite lui-même.

Pour l'extensomètre **24,** l'état de fonctionnement **E3(t)** est celui de l'extensomètre **24.**

Les données de mesure **D1(t), D2(t)** et **D3(t),** et les états de fonctionnement **E1(t), E2(t),** et **E3(t)** sont récupérés périodiquement par le serveur **30** avant d'être stockés dans le serveur. Ces informations sont transmises périodiquement ou en temps réel à l'appareil qui les reçoit au cours d'une étape de réception **S104.**

Comme on le voit sur la figure **5****,** la requête et les informations relatives aux dispositifs de mesure de mouvements sont acheminées par le réseau de communication **28.**

Ces informations relatives aux dispositifs de mesure de mouvements sont ensuite insérées dans l'image, au cours d'une étape d'insertion **S106,** puis affichées sur l'écran **54** comme illustré sur les figures **2** à **4****.**

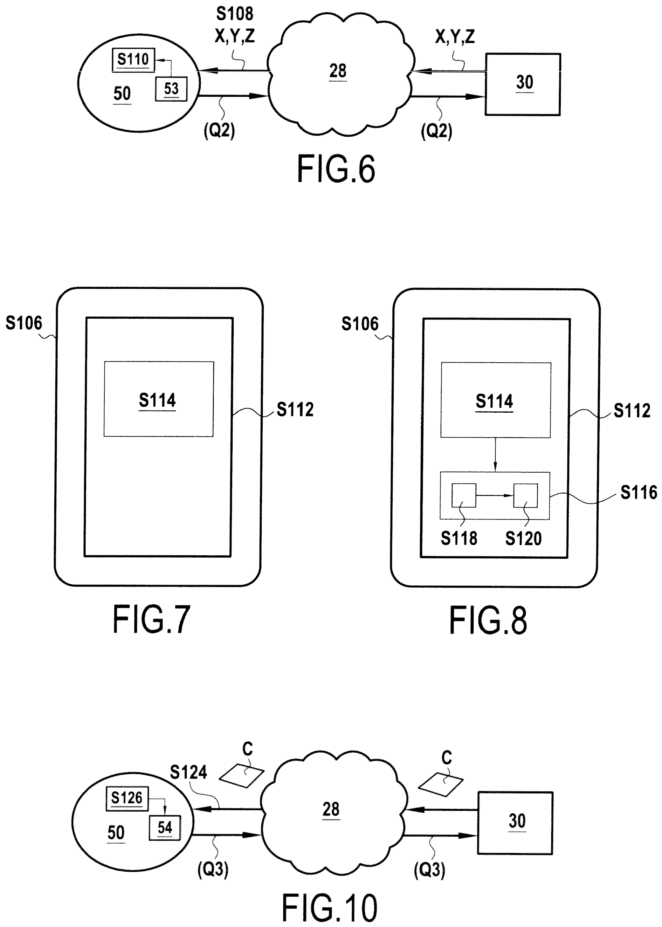

Dans cet exemple, lorsque l'utilisateur muni de l'appareil **50** arrive pour la première fois sur le site où se situe la structure à surveiller, l'appareil **50** envoi une requête **Q2** au serveur **30** afin de télécharger les coordonnées **X, Y, Z** des dispositifs de mesure **20, 22** et **24.** Cette étape de téléchargement **S108** est schématisée sur la figure **6****.**

Les coordonnées **X, Y, Z** sont ensuite stockées, lors d'une étape de stockage **S110,** dans la mémoire **53** de l'appareil **50,** cette mémoire pouvant être fixe ou amovible.

Dans un mode de réalisation de l'invention, ces coordonnées **X, Y, Z** sont utilisées pour positionner les dispositifs de mesure de mouvements dans l'image. Plus exactement, lors de l'étape d'insertion **S106** dans ladite image des informations relatives aux dispositifs de mesure de mouvements, on réalise une étape de positionnement **S112** dans l'image d'une représentation graphique d'un ou plusieurs desdits dispositifs de mesure de mouvements, cette étape de positionnement étant réalisée à l'aide des coordonnées des dispositifs de mesure de mouvements, comme cela est expliqué plus haut. Dans cet exemple, des vignettes symbolisant les dispositifs de mesure de mouvements sont insérées dans l'image de la partie de l'immeuble.

Comme cela est schématisé sur la figure **7****,** au cours de l'étape de positionnement **S112,** on réalise de préférence une étape de filtrage **S114** pour déterminer, parmi la pluralité de dispositifs de mesure, un sous-groupe de dispositifs de mesure qui sont situés dans le champ de vision de la caméra **52.** Dans l'exemple de la figure **2****,** on considère qu'il existe une dizaine de cibles de mesure et que le sous-groupe est constitué des cibles de mesure **20,22** et de l'extensomètre **24.** De préférence, mais non nécessairement, l'étape de filtrage utilise en outre l'orientation de l'appareil **50,** dans un plan horizontal, ainsi que la position géographique de l'appareil et son inclinaison, par rapport à un plan vertical.

L'inclinaison et l'orientation de l'appareil **50** sont des données angulaires qui permettent notamment de corriger de manière dynamique la position des dispositifs de mesure de mouvements dans l'image.

Selon une variante représentée sur la figure **8****,** l'étape de positionnement **S112** comporte en outre une étape de reconnaissance **S116** de la structure située dans ladite image. Pour ce faire, l'étape de reconnaissance comporte une étape d'analyse **S118** de la forme caractéristique **100** de la structure située dans l'image et une étape de comparaison **S120** de cette forme caractéristique avec des modèles de formes caractéristiques chargés dans une base de données.

La forme caractéristique **100** de la structure, en l'espèce de la partie de l'immeuble **10,** est constituée de lignes et points remarquables de la partie de l'immeuble **10** visible sur l'image. En l'espèce, la forme caractéristique **100** comprend certaines lignes horizontales **102** de la façade, les contours des fenêtres **104** et la forme des gouttières **106.**

Les modèles de formes caractéristiques sont stockés dans le serveur **30** ou bien directement dans l'appareil **50.** Par suite, l'étape de reconnaissance peut être mise en oeuvre dans l'appareil **50** ou bien dans le serveur **30.** En outre, de préférence, l'étape de reconnaissance utilise la position géographique de l'appareil **50** qui pourra éventuellement être recalée. Encore de préférence, l'étape de reconnaissance utilise l'orientation de l'appareil **50** dans un plan horizontal.

Par exemple, la base de données de modèles de formes caractéristiques comporte en outre les coordonnées géographiques des structures et de préférence leurs orientations, en particulier l'orientation des faces principales des structures.

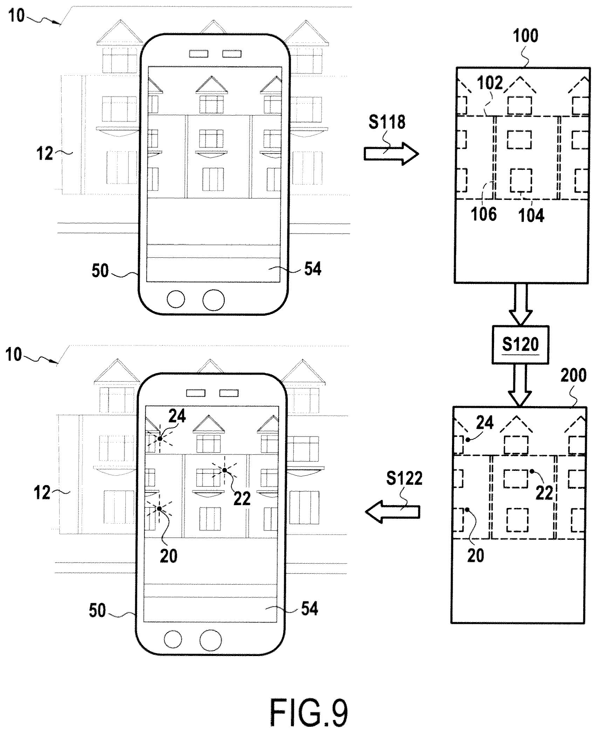

A l'issue de l'étape de comparaison, le modèle **200** de la forme caractéristique de l'immeuble identifié est utilisé afin de recaler, au cours d'une étape de recalage **S122,** la position des dispositifs de mesure de mouvements **20,22,24** dans l'image de l'immeuble **10,** étant souligné que les modèles de formes caractéristiques comprennent préférentiellement les positions des différents dispositifs de mesure de mouvements. Ce recalage, schématisé sur la figure **9****,** permet avantageusement d'améliorer la précision du positionnement des dispositifs de mesure dans l'image.

Le procédé selon l'invention comporte en outre une étape de chargement d'informations relatives à la déformation de l'immeuble **10.** Il s'agit en l'espèce d'une courbe de tassement **C** obtenu en agrégeant plusieurs mesures prises par les dispositifs de mesure de mouvements au cours du temps. Pour ce faire, le procédé comporte une étape **S122** d'envoi d'une requête **Q3** au serveur **30** et une étape **S124** de réception, en réponse à ladite requête, de la courbe de tassement **C** de l'immeuble **10,** et une étape **S126** d'insertion dans l'image desdites informations relatives aux mouvements ou à la déformation de la structure.

## Revendications

1. Procédé de représentation des mouvements éventuels d'une structure (10) à surveiller, ledit procédé étant mis en oeuvre dans un appareil (50, 50') comprenant un dispositif de prise d'images (52), ladite structure étant munie d'au moins un dispositif de mesure de mouvements (20, 22, 24) qui est fixé à ladite structure et réalise des mesures de mouvements pour permettre la mesure des déformations éventuelles de ladite structure, ledit procédé comportant :
• une étape (S100) d'acquisition d'une image de la structure à l'aide du dispositif de prise d'images ;
• une étape (S102) d'envoi d'une requête (Q1) depuis l'appareil vers un serveur distant (30) ;
• une étape (S104) de réception dans l'appareil, en réponse à ladite requête, d'au moins une information (D1, D2, D3, E1, E2, E3) relative au dispositif de mesure de mouvements, ladite information comprenant au moins une donnée de mesure de mouvements obtenue à l'aide du dispositif de mesure de mouvements ;
• une étape (S106) d'insertion, dans ladite image, d'au moins ladite donnée de mesure de mouvements ; et
• une étape (S112) de positionnement dans l'image d'une représentation graphique du dispositif de mesure de mouvements.

2. Procédé selon la revendication 1, **caractérisé en ce que** le dispositif de mesure de mouvements est une cible de mesure qui est visée par un théodolite relié au serveur distant.

3. Procédé selon la revendication 1, **caractérisé en ce que** le dispositif de mesure de mouvements est un capteur relié au serveur distant.

4. Procédé selon l'une quelconque des revendications 1 à 3, **caractérisé en ce que** l'étape de positionnement (S112) est réalisée lors de l'étape (S106) d'insertion dans ladite image de l'information relative au dispositif de mesure de mouvements.

5. Procédé selon la revendication 4, **caractérisé en ce que** l'étape (S112) de positionnement est réalisée à l'aide des coordonnées (X, Y, Z) du dispositif de mesure de mouvements (20,22,24).

6. Procédé selon la revendication 5, dans lequel la structure (10) est munie d'une pluralité de dispositifs de mesure de mouvements (20,22,24), **caractérisé en ce que** l'étape de positionnement comporte une étape de filtrage dans laquelle on sélectionne les dispositifs de mesure de mouvements qui sont situés dans le champ de vision du dispositif de prise d'images.

7. Procédé selon l'une quelconque des revendications 4 à 6, **caractérisé en ce que** l'étape de positionnement comporte une étape (S116) de reconnaissance de la structure située dans ladite image.

8. Procédé selon la revendication 7, **caractérisé en ce que** l'étape (S116) de reconnaissance comporte une étape (S118) d'analyse de la forme caractéristique de la structure située dans l'image et une étape (S120) de comparaison de cette forme caractéristique avec des modèles de formes caractéristiques chargés dans une base de données.

9. Procédé selon l'une quelconque des revendications 1 à 8, **caractérisé en ce qu'**il comporte en outre une étape (S122) d'envoi d'une requête (Q3) depuis l'appareil vers le serveur distant (30) et une étape (S124) de réception dans l'appareil, en réponse à ladite requête, d'informations (C) relatives à la déformation de la structure (10), et une étape (S126) d'insertion dans l'image desdites informations relatives à la déformation de la structure.

10. Programme d'ordinateur comprenant des instructions pour l'exécution des étapes du procédé selon l'une quelconque des revendications 1 à 9, lorsque ledit programme est exécuté par un ordinateur (50,50').

11. Procédé de surveillance des mouvements éventuels d'une structure (10), ladite structure étant munie d'au moins un dispositif de mesure de mouvements (20, 22, 24) qui est fixé à ladite structure et réalise des mesures de mouvements pour permettre la mesure des éventuels mouvements de la structure, ledit procédé comportant :
• une étape (S100) d'acquisition d'une image de la structure à l'aide d'un dispositif de prise d'images disposé dans un appareil ;
• une étape d'acquisition d'au moins une donnée de mesure de mouvements obtenue à l'aide du dispositif de mesure de mouvements ;
• une étape de transmission de ladite donnée de mesure de mouvements vers un serveur distant, distinct de l'appareil ;
• une étape (S102) d'envoi d'une requête depuis l'appareil vers le serveur distant ;
• une étape (S104) de réception dans l'appareil, en réponse à la requête, de ladite donnée de mesure de mouvements ;
• une étape (S106) d'insertion, dans ladite image, de ladite donnée de mesure de mouvements;
• une étape (S112) de positionnement dans l'image d'une représentation graphique du dispositif de mesure de mouvements ; et
• une étape d'affichage, dans l'appareil, de l'image dans laquelle est insérée la représentation graphique du dispositif de mesure de mouvements et la donnée de mesure de mouvements.

12. Appareil (50,50') comprenant un dispositif de prise d'images (52), un dispositif d'affichage (54) et des moyens logiciels adaptés à la mise en oeuvre du procédé selon l'une quelconque des revendications 1 à 9.

13. Installation comportant une pluralité de dispositifs de mesure de mouvements (20,22,24) fixés à une structure (10) à surveiller, un serveur distant (30) recevant les données de mesure obtenues à l'aide des dispositifs de mesure de mouvements, et au moins un appareil (50,50') selon la revendication 12 communiquant avec ledit serveur distant.

14. Installation selon la revendication 13, **caractérisée en ce que** le serveur comporte des moyens de récupération (34) et des moyens de stockage (32) de données de mesure obtenues à l'aide des dispositifs de mesure.

15. Installation selon l'une quelconque des revendications 13 ou 14, **caractérisée en ce que** les dispositifs de mesure de mouvements comprennent au moins une cible de mesure (20,22) visée par un théodolite (26) relié au serveur distant, ou au moins un capteur (24) relié au serveur distant.

## Patentansprüche

1. Verfahren zur Darstellung der möglichen Bewegungen einer zu überwachenden Struktur (10), wobei das Verfahren in einem Gerät (50, 50'), das eine Bildaufnahmevorrichtung (52) umfasst, durchgeführt wird, wobei die Struktur mit wenigstens einer Bewegungsmessvorrichtung (20, 22, 24) versehen ist, die an der Struktur befestigt ist und Bewegungsmessungen durchführt, um die Messung der möglichen Verformungen der Struktur zu ermöglichen, wobei das Verfahren umfasst:
• einen Schritt (S100) des Aufnehmens eines Bildes der Struktur mit Hilfe der Bildaufnahmevorrichtung,
• einen Schritt (S102) des Sendens einer Anfrage (Q1) von dem Gerät zu einem entfernten Server (30),
• einen Schritt (S104) des Empfangens von wenigstens einer Information (D1, D2, D3, E1, E2, E3) bezüglich der Bewegungsmessvorrichtung in dem Gerät als Reaktion auf die Anfrage, wobei die Information wenigstens eine Bewegungsmessangabe umfasst, die mit Hilfe der Bewegungsmessvorrichtung erhalten wird,
• einen Schritt (S106) des Einfügens wenigstens der Bewegungsmessangabe in das Bild, und
• einen Schritt (S112) des Positionierens einer grafischen Darstellung der Bewegungsmessvorrichtung in dem Bild.

2. Verfahren nach Anspruch 1, **dadurch gekennzeichnet, dass** die Bewegungsmessvorrichtung ein Messziel ist, das durch einen Theodolit, welcher mit dem entfernten Server verbunden ist, anvisiert wird.

3. Verfahren nach Anspruch 1, **dadurch gekennzeichnet, dass** die Bewegungmessvorrichtung ein mit dem entfernten Server verbundener Sensor ist.

4. Verfahren nach einem der Ansprüche 1 bis 3, **dadurch gekennzeichnet, dass** der Positionierungsschritt (S112) während des Schrittes (S106) des Einfügens der Information bezüglich der Bewegungsmessvorrichtung in das Bild durchgeführt wird.

5. Verfahren nach Anspruch 4, **dadurch gekennzeichnet, dass** der Positionierungsschritt (S112) mit Hilfe der Koordinaten (X, Y, Z) der Bewegungsmessvorrichtung (20, 22, 24) durchgeführt wird.

6. Verfahren nach Anspruch 5, wobei die Struktur (10) mit einer Vielzahl von Bewegungsmessvorrichtungen (20, 22, 24) versehen ist, **dadurch gekennzeichnet, dass** der Positionierungsschritt einen Filterschritt umfasst, bei dem die Bewegungsmessvorrichtungen ausgewählt werden, die sich im Sichtfeld der Bildaufnahmevorrichtung befinden.

7. Verfahren nach einem der Ansprüche 4 bis 6, **dadurch gekennzeichnet, dass** der Positionierungsschritt einen Schritt (S116) des Erkennens der in dem Bild befindlichen Struktur umfasst.

8. Verfahren nach Anspruch 7, **dadurch gekennzeichnet, dass** der Erkennungsschritt (S116) einen Schritt (S118) des Analysierens der charakteristischen Form der in dem Bild befindlichen Struktur und einen Schritt (S120) des Vergleichens dieser charakteristischen Form mit Modellen mit charakteristischen Formen, die in eine Datenbank geladen werden, umfasst.

9. Verfahren nach einem der Ansprüche 1 bis 8, **dadurch gekennzeichnet, dass** es ferner einen Schritt (S122) des Sendens einer Anfrage (Q3) von dem Gerät zu dem entfernten Server (30) und einen Schritt (S124) des Empfangens von Informationen (C) bezüglich der Verformung der Struktur (10) in dem Gerät als Reaktion auf die Anfrage sowie einen Schritt (S126) des Einfügens der Informationen bezüglich der Verformung der Struktur in das Bild umfasst.

10. Computerprogramm, umfassend Befehle für die Durchführung der Schritte des Verfahrens nach einem der Ansprüche 1 bis 9, wenn das Programm durch einen Computer (50,50') ausgeführt wird.

11. Verfahren zur Überwachung der möglichen Bewegungen einer Struktur (10), wobei die Struktur mit wenigstens einer Bewegungsmessvorrichtung (20, 22, 24) versehen ist, die an der Struktur befestigt ist und Bewegungsmessungen durchführt, um die Messung der möglichen Bewegungen der Struktur zu ermöglichen, wobei das Verfahren umfasst:
• einen Schritt (S100) des Aufnehmens eines Bildes der Struktur mit Hilfe einer Bildaufnahmevorrichtung, die in dem Gerät angeordnet ist,
• einen Schritt des Erfassens von wenigstens einer Bewegungsmessangabe, die mit Hilfe der Bewegungsmessvorrichtung erhalten wird,
• einen Schritt des Übertragens der Bewegungsmessangabe zu einem entfernten Server, der von dem Gerät getrennt ist,
• einen Schritt (S102) des Sendens einer Anfrage von dem Gerät zu dem entfernten Server,
• einen Schritt (S104) des Empfangens der Bewegungsmessangabe in dem Gerät als Reaktion auf die Anfrage,
• einen Schritt (S106) des Einfügens der Bewegungsmessangabe in das Bild,
• einen Schritt (S112) des Positionierens einer grafischen Darstellung der Bewegungsmessvorrichtung in dem Bild, und
• einen Schritt des Anzeigens des Bildes, in das die grafische Darstellung der Bewegungsmessvorrichtung und die Bewegungsmessangabe eingefügt sind, in dem Gerät.

12. Gerät (50, 50'), das eine Bildaufnahmevorrichtung (52), eine Anzeigevorrichtung (54) und Softwaremittel umfasst, die für die Durchführung des Verfahrens nach einem der Ansprüche 1 bis 9 ausgelegt sind.

13. Einrichtung, umfassend eine Vielzahl von Bewegungsmessvorrichtungen (20, 22, 24), welche an einer zu überwachenden Struktur (10) befestigt sind, einen entfernter Server (30), der die Messdaten, welche mit Hilfe der Bewegungsmessvorrichtungen erhalten werden, empfängt, sowie wenigstens ein Gerät (50, 50') nach Anspruch 12, das mit dem entfernten Server in Verbindung steht.

14. Einrichtung nach Anspruch 13, **dadurch gekennzeichnet, dass** der Server Rückgewinnungsmittel (34) und Mittel zur Speicherung (32) von Messdaten, die mit Hilfe der Messvorrichtungen erhalten werden, umfasst.

15. Einrichtung nach einem der Ansprüche 13 oder 14, **dadurch gekennzeichnet, dass** die Bewegungsmessvorrichtungen wenigstens ein Messziel (20, 22), das durch einen mit dem entfernten Server verbundenen Theodolit (26) anvisiert wird, oder wenigstens einen mit dem entfernten Server verbundenen Sensor (24) umfassen.

## Claims

1. A method of representing the movements, if any, of a structure (10) to be monitored, said method being performed in an appliance (50, 50') including a camera (52), said structure being provided with at least one movement measurement device (20, 22, 24) that is secured to said structure and performs movement measurements in order to enable any deformations of said structure to be measured, said method comprising:
• an acquisition step (S100) of acquiring an image of the structure with the help of the camera;
• a sending step (S102) of sending a query (Q1) from the appliance to a remote server (30);
• a reception step (S104) of the appliance receiving at least some information (D1, D2, D3, E1, E2, E3) in response to said query about the movement measurement device, said information including data about at least one movement measurement obtained with the help of the movement measurement device;
• an insertion step (S106) of inserting data about said at least one measurement in said image; and
• a positioning step (S112) of positioning a graphics representation of the movement measurement device in the image.

2. A method according to claim 1, **characterized in that** the movement measurement device is a measurement target that is sighted by a theodolite connected to the remote server.

3. A method according to claim 1, **characterized in that** the movement measurement device is a sensor connected to the remote server.

4. A method according to any one of claims 1 to 3, **characterized in that** positioning step (S112) is performed during the step (S106) of inserting information about the movement measurement device in said image, a positioning step (S112) is performed of positioning a graphics representation of the movement measurement device in the image.

5. A method according to claim 4, **characterized in that** the positioning step (S112) is performed with the help of the coordinates (X, Y, Z) of the movement measurement device (20, 22, 24).

6. A method according to claim 5, wherein the structure (10) is provided with a plurality of movement measurement devices (20, 22, 24), the method being **characterized in that** the positioning step includes a filtering step in which those movement measurement devices that are situated in the field of view of the camera are selected.

7. A method according to any one of claims 4 to 6, **characterized in that** the positioning step includes a recognition step (S116) of recognizing the structure situated in said image.

8. A method according to claim 7, **characterized in that** the recognition step (S116) includes an analysis step (S118) of analyzing the characteristic shape of the structure situated in the image, and a comparison step (S120) of comparing the characteristic shape with characteristic shape models stored in a database.

9. A method according to any one of claims 1 to 8, **characterized in that** it also includes a sending step (S122) of sending a query (Q3) from the appliance to the remote server (30) and a reception step (S124) of the appliance receiving information (C) about the deformation of the structure (10) in response to said query, and an insertion step (S126) of inserting said information about the deformation of the structure in the image.

10. A computer program including instructions for executing the steps of the method according to any one of claims 1 to 9, when said program is executed by a computer (50, 50').

11. A method of monitoring the movements, if any, of a structure (10), said structure being provided with at least one movement measurement device (20, 22, 24) that is secured to said structure and performs movement measurements in order to enable any movement of the structure to be measured, said method comprising:
• an acquisition step (S100) of acquiring an image of the structure with the help of a camera arranged in an appliance;
• an acquisition step of acquiring data about at least one movement measurement obtained with the help of the movement measurement device;
• a transmission step of transmitting said movement measurement data to a remote server that is distinct from the appliance;
• a sending step (S102) of sending a query from the appliance to the remote server;
• a reception step (S104) of the appliance receiving said movement measurement data in response to the query;
• an insertion step (S106) of inserting said movement measurement data into said image;
• a positioning step (S112) of positioning a graphics representation of the movement measurement device in the image; and
• a display step of displaying, on the appliance, an image having the graphics representation of the movement measurement device and the movement measurement data inserted therein.

12. An appliance (50, 50') including a camera (52), a display device (54), and software means adapted to perform the method according to any one of claims 1 to 9.

13. An installation comprising a plurality of movement measurement devices (20, 22, 24) secured to a structure (10) to be monitored, a remote server (30) receiving measurement data obtained with the help of the movement measurement devices, and at least one appliance (50, 50') according to claim 12 in communication with said remote server.

14. An installation according to claim 13, **characterized in that** the server includes recovery means (34) and storage means (32) for recovering and storing measurement data obtained with the help of the measurement devices.

15. An installation according to claim 13 or 14, **characterized in that** the movement measurement devices comprises at least one measurement target (20, 22) sighted by a theodolite (26) that is connected to the remote server, or at least one sensor (24) that is connected to the remote server.
